# NEUE EUROPÄISCHE PATENTSCHRIFT

(11) **EP 0 312 712 B2**
(45) Veröffentlichungstag und Bekanntmachung des Hinweises auf die Entscheidung über den Einspruch: **16.08.1995**
(45) Hinweis auf die Patenterteilung: 29.05.1991
(21) Anmeldenummer: 88111586.9
(22) Anmeldetag: 19.07.1988
(51) Int. Cl.: B29C 65/18

(54) **Verfahren und eine Einrichtung zum stirnseitigen Verschweissen rohrförmiger thermoplastischer Teile**
Method and device for welding the front ends of tubular thermoplastic parts together
Procédé et dispositif pour souder la partie frontale de pièces tubulaires thermoplastiques

(30) Priorität: 23.09.1987 CH 3682/87
(43) Veröffentlichungstag der Anmeldung: 26.04.1989
(73) Patentinhaber: GEORG FISCHER AKTIENGESELLSCHAFT, CH-8201 Schaffhausen (CH)
(72) Erfinder: Kunz, Peter, CH-8200 Schaffhausen (CH)

(56) Entgegenhaltungen:
- EP-A- 0 167 870
- DE-A- 2 157 951
- DE-A- 2 316 500
- DE-B- 1 429 001
- US-A- 3 013 925

## Beschreibung

Die Erfindung betrifft ein Verfahren zum stirnseitigen Verschweissen der Enden rohrförmiger thermoplastischer Teile, wie es im Oberbegriff von Anspruch 1 gekennzeichnet ist sowie eine dafür erforderliche Einrichtung, wie sie im Oberbegriff von Anspruch 2 beschrieben ist.

Bekannt ist das stirnseitige Verschweissen von plan bearbeiteten Rohrenden, welche durch direkten Kontakt mit einem Heizspiegel aufgeschmolzen und anschliessend mit einem einstellbaren Druck zusammengefügt werden (z.B. DE-B2-2212055). Beim Zusammenfügen bildet sich am Innen- wie auch am Aussenumfang der rohrförmigen Teile ein Schweisswulst, wobei der innere Schweisswulst nachteilig den Durchflussquerschnitt verringert und den Strömungswiderstand erhöht. Durch das Ausweichen der Schmelze auch in den Innenraum wird der Aufbau eines erforderlichen Schweissdruckes verschlechtert.

Ein Verfahren der eingangs genannten Art ist durch die EP-0167870-A2 bekanntgeworden bei welchem ein vom Aussenumfang zum Innenumfang absinkendes Temperaturprofil zum Erhalt eines möglichst geringen Schweisswulstes am Innenumfang der verschweissten Rohre durch eine entsprechende Abschrägung der stirnseitigen Rohrenden erreicht wird. Dies erfordert eine entsprechende zusätzliche Anfasung der Rohrenden.

Aufgabe der vorliegenden Erfindung ist die Schaffung eines Verfahrens und einer dafür erforderlichen Einrichtung der eingangs genannten Art, bei welchem ein innerer Wulst in der Schweissverbindung weitgehend vermieden werden soll.

Erfindungsgemäss wird diese Aufgabe durch die kennzeichnenden Verfahrensmerkmale nach Anspruch 1 und der Einrichtungsmerkmale von Anspruch 2 gelöst.

Das vorgeschlagene Verfahren und die dafür erforderliche Einrichtung ermöglicht die Herstellung von Schweissverbindungen bei rohrförmigen Teilen aus thermoplastischem Material, bei denen durch die geringere Aufschmelzung am Innenumfang durch Abschirmung der Wärmestrahlen mittels eines Abschirmbleches nur ein kleiner, meistens aber gar kein Schweisswulst am Innenumfang entsteht. Hierbei wird die geringere Aufschmelzung im Innenumfang durch ein vom Aussenumfang zum Innenumfang hin absinken des Temperaturprofil erreicht, was durch die Anwendung von Strahlungswärme einfach ermöglicht wird.

Vorteilhafte weitere Einrichtungsmerkmale sind in den abhängigen Ansprüchen gekennzeichnet.

Die Erfindung ist anhand der beiliegenden Zeichnungen beispielsweise beschrieben. Es zeigen:
- Fig. 1: das Verschweissen zweier rohrförmiger Teile mittels einer vereinfacht dargestellten Schweissvorrichtung während der Aufheizphase
- Fig. 2: die fertige Schweissverbindung
- Fig. 3: ein Rohrende mit Heizspiegel im vergrösserten Teilschnitt und
- Fig. 4: ein Diagramm das Temperaturverlaufes.

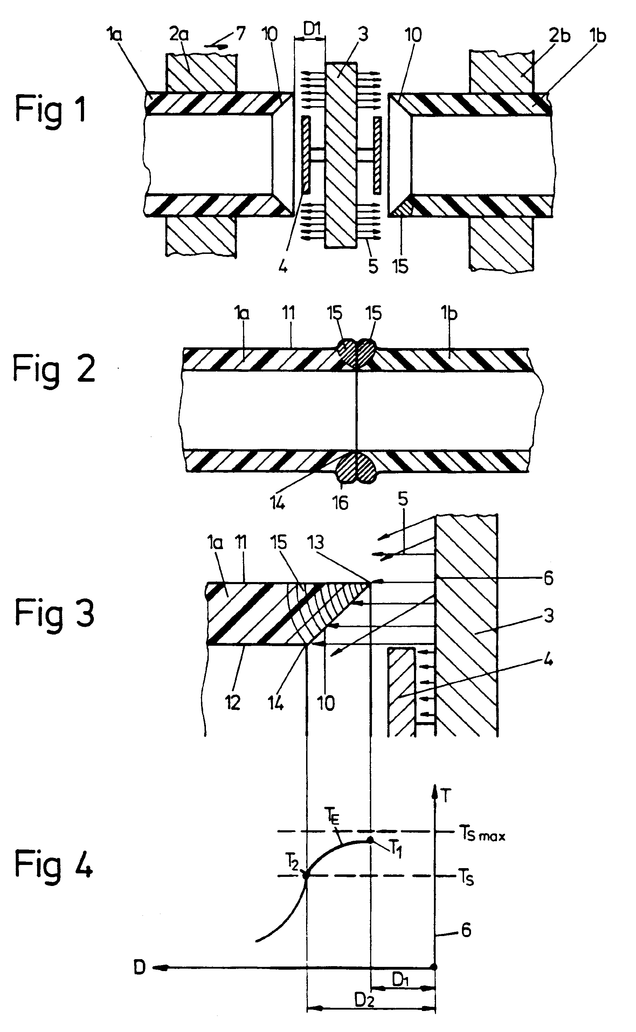

Die Fig. 1 zeigt die Enden zweier rohrförmiger Teile 1a, 1b, welche in Spannvorrichtungen 2a, 2b einer Schweissvorrichtung koaxial mit Distanz zueinander gehalten sind.

Eine der beiden Spannvorrichtungen 2a, 2b ist in axialer Richtung verschiebbar.

Ein zwischen die Rohrenden einschwenkbarer Heizspiegel 3 erzeugt Strahlungswärme und ist mit einer einstellbaren Distanz D₁ zu den Rohrenden angeordnet.

Die Rohrenden weisen eine Abschrägung 10 auf, welche vom Aussenumfang 11 rohreinwärts gerichtet zum Innenumfang 12 verläuft.

Am Heizspiegel 3 ist ein Abschirmblech 4 mit Distanz auswechselbar befestigt, dessen Aussendurchmesser jeweils dem Innendurchmesser des zu verschweissenden Rohres annähernd entspricht.

Fig. 3 zeigt ein abgeschrägtes Ende eines rohrförmigen Teiles und die Einwirkung der Wärmestrahlen 5.

In Fig. 4 ist der Temperaturverlauf T abhängig von der Distanz D von der Heizspiegel-Abstrahlfläche 6 ersichtlich, welcher durch Linie TE dargestellt ist.

Ts ist die Schmelztemperatur des verwendeten Thermoplastes und T_{s max} die maximal zulässige Schmelztemperatur.

D₁ ist die Distanz des äusseren Endes 13 und D₂ die Distanz des inneren Endes 14 des rohrförmigen Teiles 1a bzw. 1b von der Abstrahlfläche 6. Die Temperatur T2 beim inneren Ende 14 sollte möglichst bei der Schmelztemperatur Ts liegen, die Temperatur T1 unterhalb der max. zulässigen Schmelztemperatur Ts max. Dieser Temperaturverlauf T_{E} kann durch die Heizleistung, die Heizzeit, durch die Einstellung der Distanz D, den Vertauf der Abschrägung 10 und/oder die Grösse und Lage des Abschirmbleches 4 festgelegt werden. Es besteht auch die Möglichkeit, dass der Heizspiegel 3 eine von Aussen nach Innen abnehmende Heizleistung aufweist.

Ein optimales Temperaturprofil T_{E} gemäss Fig. 4 ergibt dann eine dreieckförmige Aufschmelzzone 15 wie in Fig. 3 dargestellt.

Durch kontrolliertes Zusammenfügen der rohrförmigen Teile 1a, 1b nach dem Aufschmelzen von deren Enden, z.B. durch Verschieben des Teiles 1a mittels der Spannvorrichtung 2a gemäss Pfeil 7 (Fig. 1) erfolgt die Verschweissung. Hierbei werden die Aufschmelzzonen 15 im wesentlichen nach aussen verformt und ergeben einen am Aussenumfang 11 verlaufenden Schweisswulst 16 (Fig. 2).

Das innere Ende 14 wird dabei nicht oder nur geringfügig gastaucht und bildet eine Abstützung zur Erzeugung des Schweissdruckes. Somit kann sich am Innenumfang nur ein kleiner, meistens aber gar kein Schweisswulst bilden.

## Patentansprüche

1. Verfahren zum stirnseitigen Verschweissen der Enden rohrförmiger thermoplastischer Teile (1a,1b), wobei beide Rohrenden bis zur Schmelzung des thermoplastischen Materials erwärmt und anschliessend mit Druck zusammengefügt werden, wobei an den zu verschweissenden Rohrenden (1a,1b) ein vom Aussenumfang (11) zum Innenumfang (12) hin absinkendes Temperaturprofil (TE) mittels Strahlungswärme erzeugt wird, so dass beim kontrollierten Zusammenfügen der beiden Rohrenden (1a, 1b) an der Innenwand keine oder höchstens eine minimale Deformation mit genügender Verschweissung und an der Ausenwand eine gute Schweissverbindung mit einem optimalen Schweisswulst (16) entsteht, dadurch gekennzeichnet, dass durch Abschirmung der Wärmestrahlung (5) durch ein an den Innenumfang (12) der Rohrenden (1a,1b) angepasstes Abschirmblech (4) das gewünschte Temperaturprofil (TE) mit der am Rohrinnenumfang (12) erforderlichen Schmelz-Temperatur (TS) erreicht wird.

2. Einrichtung zum stirnseitigen Verschweissen der Enden rohrförmiger thermoplastischer Teile (1a,1b) gemäss dem Verfahren nach Anspruch 1 mit die rohrförmigen Enden (1a,1b) haltenden Spannvorrichtungen (2a,2b), von denen mindestens eine in axiale Richtung verschiebbar ist sowie mit einem zwischen die Rohrenden (1a, 1b) einschwenkbaren und Strahlungswärme erzeugenden Heizspiegel (3), dadurch gekennzeichnet, dass mindestens an einer Heizspiegel-Abstrahlfläche (6) ein, dem Innenumfang der Rohrenden angepasstes Abschirmblech (4) befestigt ist.

3. Einrichtung nach Anspruch 2, dadurch gekennzeichnet, dass das Abschirmblech (4) eine Distanz zur Heizspiegel-Abstrahlfläche (6) aufweist.

4. Einrichtung nach Anspruch 2 oder 3, dadurch gekennzeichnet, dass das Abschirmblech (4) auswechselbar befestigt ist, wobei dessen Aussendurchmesser jeweils annähernd dem Innendurchmesser der zu verschweissenden rohrförmigen Teile (1a,1b) entspricht.

## Claims

1. Method for welding the front ends of tubular thermoplastic parts (1a, 1b), the two tube ends being heated until the thermoplastic material melts and subsequently being joined with pressure, wherein on the tube ends (1a, 1b) to be welded a temperature profile (TE) falling from the outer circumference (11) towards the inner circumference (12) is produced by means of radiant heat, so that, during the controlled joining of the two tube ends (1a, 1b), no deformation or at most only a minimal deformation occurs on the inner wall with sufficient welding, and on the outer wall a good welded joint occurs with an optimal bead (16), characterized in that by shielding the heat radiation (5) by way of a shielding plate (4) adapted to the inner circumference (12) of the tube ends (1a, 1b) the desired temperature profile (TE) with the melting temperature (TS) required at the inner tube circumference (12) is achieved.

2. Device for welding the front ends of tubular thermoplastic parts (1a, 1b) according to the method of claim 1, having clamping devices (2a, 2b) holding the tubular ends (1a, 1b), with at least one clamping device being displaceable in the axial direction, and having a heating mirror (3) which can be pivoted between the tube ends (1a, 1b) and produces radiant heat, characterized in that a shielding plate (4) adapted to the inner circumference of the tube ends is secured on at least one heating-mirror radiating surface (6).

3. Device according to claim 2, characterized in that the shielding plate (4) is at a distance from the heating-mirror radiating surface (6).

4. Device according to claim 2 or 3, characterized in that the shielding plate (4) is secured in exchangeable manner, the outer diameter of this plate corresponding in each case approximately to the inner diameter of the tubular parts (1a, 1b) to be welded.

## Revendications

1. Procédé de soudure frontale ou bout à bout des extrémités de pièces tubulaires thermoplastiques (1a, 1b) dans lequel les deux extrémités de tubes sont échauffées jusqu'à la fusion du matériau thermoplastique, puis assemblées sous pression, on produit sur les extrémités (1a, 1b) de tubes à souder un profil de températures (TE) décroissant de la périphérie extérieure (11) à la périphérie intérieure (12), au moyen de chaleur de rayonnement, de façon telle qu'à l'assemblage contrôlé des deux extrémités (1a, 1b) de tubes, il ne se produise sur la paroi intérieure pas de déformation ou au plus une déformation minimum avec une soudure suffisante, et que, sur la paroi extérieure il se produise une bonne liaison par soudure, avec un bourrelet de soudure optimum (16), caractérisé en ce que, par protection à l'égard du rayonnement thermique (5) par une tôle de protection (4) adaptée à la périphérie intérieure (12) des extrémités de tube (1a, 1b), on obtient le profil de température souhaité (TE) avec la température de fusion (TS) nécessaire à la périphérie intérieure (12) des tubes.

2. Dispositif destiné à la soudure frontale des extrémités de pièces tubulaires thermoplastiques (1a, 1b) au moyen du procédé selon la revendication 1, comportant des dispositifs de serrage (2a, 2b) qui maintiennent les extrémités (1a, 1b) des tubes et dont un au moins est susceptible d'être déplacé en translation dans la direction axiale, ainsi qu'un miroir chauffant (3) susceptible d'être amené par pivotement entre les extrémités (1a, 1b) des tubes, et produisant de la chaleur par rayonnement, caractérisé en ce qu'une tôle de protection (4) adaptée à la périphérie intérieure des extrémités de tube, est fixée à au moins une surface de rayonnement (6) du miroir chauffant.

3. Dispositif selon la revendication 2, caractérisé en ce que la tôle de protection (4) est située à une certaine distance de la surface de rayonnement (6) du miroir chauffant.

4. Dispositif selon la revendication 2 ou 3, caractérisé en ce que la tôle de protection (4) est fixée de façon à pouvoir être remplacée, son diamètre extérieur correspondant dans chaque cas approximativement au diamètre intérieur des pièces tubulaires (1a, 1b) à souder.
